# EUROPÄISCHE PATENTANMELDUNG

(11) **EP 4 847 947 A1**
(43) Veröffentlichungstag der Anmeldung: **02.12.2026**
(21) Anmeldenummer: 25179326.1
(22) Anmeldetag: 28.05.2025
(51) Int. Cl.: G01S 7/481, G01S 17/89

(54) **LASERSCANNER**

(71) Anmelder: RIEGL Laser Measurement Systems GmbH, 3580 Horn (AT)
(72) Erfinder: RIEGL, Johannes, 3754 Trabenreith (AT); REICHERT, Rainer, 3580 Horn (AT); PAUR, Matthias, 3562 Schönberg am Kamp (AT); PFENNIGBAUER, Martin, 3430 Tulln (AT)
(74) Vertreter: Weiser Voith Gugler Patentanwälte Partnerschaft

(57) **Zusammenfassung**

Ein Laserscanner (1) zum Vermessen einer Umgebung (2) umfasst eine Basis (4), eine an der Basis (4) um eine vertikale Achse (5) drehbar gelagerte Halterung (6), einen an der Halterung um eine horizontale Achse (8) drehbar gelagerten Drehspiegel (7), einen Antrieb (9), einen Lasersender (10) zum Aussenden eines Sendestrahls (14) über den Drehspiegel auf die Umgebung, und einen Empfänger (11) zum Empfangen des an der Umgebung als Empfangsstrahl (14') reflektierten Sendestrahls, wobei der Laserscanner beidseits einer von der horizontalen und der vertikalen Achse aufgespannten Ebene (19) eine Durchtrittsöffnung (20₁, 20₂) aufweist, und der Drehspiegel eine flache Form mit zwei einander gegenüberliegenden Hauptflächen (7', 7") hat, welche den Sendestrahl bei Drehung des Drehspiegels in ersten Drehstellungen durch die Durchtrittsöffnung an einer Seite (18₁) der genannten Ebene auf die Umgebung ablenken und in zweiten Drehstellungen durch die Durchtrittsöffnung an der anderen Seite (18₂) der genannten Ebene.

## Beschreibung

Die vorliegende Erfindung betrifft einen Laserscanner zum Vermessen einer Umgebung, welcher eine Basis, eine an der Basis um eine vertikale Achse drehbar gelagerte Halterung, einen an der Halterung um eine horizontale Achse drehbar gelagerten Drehspiegel mit mehreren Spiegelflächen, einen Antrieb zum Drehen der Halterung um die vertikale Achse und zum Drehen des Drehspiegels um die horizontale Achse, einen Lasersender zum Aussenden eines Sendestrahls über den Drehspiegel auf die Umgebung, und einen Empfänger zum Empfangen des an der Umgebung als Empfangsstrahl reflektierten Sendestrahls umfasst.

Derartige Laserscanner werden stationär aufgestellt oder von einem Land-, Wasser- oder Luftfahrzeug mitgeführt, um eine Umgebung wie eine Landschaft, einen Steinbruch, ein Gebäude, einen Straßenzug, eine Stadt, einen Gewässergrund, Wolken usw. zu vermessen. Vom Laserscanner aus wird ein gepulster oder modulierter Sendestrahl mithilfe des um die vertikale und die horizontale Achse drehenden Drehspiegels auf viele Ziele (auch: "Abtastpunkte") der Umgebung ausgesandt. Aus Laufzeitmessungen von Sendestrahl und Empfangsstrahl werden die Zielentfernungen und daraus - in Kenntnis der jeweiligen Sendestrahlrichtung (und optional der Position und Lage des Laserscanners) - z.B. ein Punktemodell ("3D-Punktwolke") der Umgebung erstellt.

Herkömmlicherweise ist der Drehspiegel ein Prisma oder Pyramidenstumpf mit einer Vielzahl von an seinen Mantelflächen ausgebildeten Spiegelflächen, das oder der in hoher Geschwindigkeit um die horizontale Achse und wesentlich langsamer um die vertikale gedreht wird. Pro Umdrehung des Spiegelrads um die horizontale Achse fächert jede Spiegelfläche den Sendestrahl einmal in einem Scanfächer über einen Winkelbereich um die horizontale Achse auf, der auf einer Seite einer von der horizontalen und der vertikalen Achse aufgespannten Ebene liegt, um die Umgebung entlang einer Scanlinie auf dieser Seite der Ebene abzutasten. Um die Umgebung rund um den Laserscanner abzutasten, wird der Drehspiegel (und damit die genannte Ebene bzw. der genannte Winkelbereich oder Scanfächer) um bis zu 360° um die vertikale Achse gedreht. Einer raschen Vermessung der Umgebung sind dabei Grenzen gesetzt, da die Drehgeschwindigkeit um die vertikale Achse nicht beliebig erhöht werden kann. Dies steht u.a. einer raschen Aktualisierung der Vermessung der Umgebung (z.B. bei darin bewegten Objekten) entgegen.

Es ist Aufgabe der vorliegenden Erfindung, einen Laserscanner zu schaffen, welcher eine rasche Vermessung der Umgebung ermöglicht.

Dieses Ziel wird mit einem Laserscanner der eingangs genannten Art erreicht, der sich erfindungsgemäß dadurch auszeichnet, dass er beidseits einer von der horizontalen und der vertikalen Achse aufgespannten Ebene eine Durchtrittsöffnung für die Sende- und Empfangsstrahlen aufweist, und der Drehspiegel eine flache Form mit zwei einander gegenüberliegenden Hauptflächen hat, welche die Spiegelflächen bilden und den Sendestrahl bei Drehung des Drehspiegels in ersten Drehstellungen des Drehspiegels durch die Durchtrittsöffnung an einer Seite der genannten Ebene auf die Umgebung ablenken und in zweiten Drehstellungen des Drehspiegels durch die Durchtrittsöffnung an der anderen Seite der genannten Ebene.

Der Laserscanner der Erfindung verwendet einen zweiseitigen flachen Drehspiegel, um den Sendestrahl beidseits auf die Umgebung auszusenden und dabei aufeinanderfolgend sowohl einen "Vorwärtsblick" als auch einen "Rückwärtsblick" auf die Umgebung zu erhalten. Der Sendestrahl wird in den ersten Drehstellungen des Drehspiegels durch die Durchtrittsöffnung an der einen Seite der von den Drehachsen aufgespannten Ebene über einen ersten Winkelbereich ausgesandt, um den Vorwärtsblick auf die Umgebung zu erhalten, und in den zweiten Drehstellungen des Drehspiegels über einen zweiten Winkelbereich durch die Durchtrittsöffnung an der anderen Seite der Ebene, um den Rückwärtsblick auf die Umgebung zu erhalten. Dadurch ist die Umgebung bereits nach einer 180°-Drehung des Drehspiegels um die vertikale Achse einmal rundum abgetastet, doppelt so rasch wie mit einem herkömmlichen Prismen- oder Pyramidenstumpf-Drehspiegel.

Der Lasersender kann von verschiedenen Positionen aus unter verschiedenen Winkeln auf den Drehspiegel gerichtet sein, um die Umgebung mit Vorwärts- und Rückwärtsblick zu vermessen. In einer bevorzugten Ausführungsform ist der Lasersender dazu ausgebildet, den Sendestrahl im Wesentlichen auf die horizontale Achse hin auszusenden. Dadurch trifft der Sendestrahl über besonders große Drehwinkel um die horizontale Achse auf die Spiegelflächen des Drehspiegels auf, wodurch ein besonders großer Ausschnitt der Umgebung vermessen werden kann. Bevorzugt ist der Lasersender ferner dazu ausgebildet, den Sendestrahl entlang der vertikalen Achse auszusenden. Auf diese Weise können mit dem Vorwärtsblick und dem Rückwärtsblick etwa gleich große Winkelbereiche erfasst und die Umgebung damit besonders gleichmäßig vermessen werden, ohne dass der Lasersender der Drehung um die vertikale Achse nachgeführt werden müsste.

Vorteilhaft ist, wenn zumindest eine, insbesondere beide der Spiegelflächen des Drehspiegels gegenüber der horizontalen Achse geneigt ist/sind. Dadurch hat der Drehspiegel z.B. Keilform und jede geneigte Spiegelfläche lenkt den Sendestrahl je nach seiner Einstrahlrichtung entlang gekrümmter Scanlinien auf die Umgebung, deren Krümmungen in Vorwärtsblick gegenüber jenen in Rückwärtsblick umgekehrt sind. Somit kann eine vollständige Überlappung der Scanlinien nach einer 180°-Drehung des Drehspiegels um die vertikale Achse verhindert und die Auflösung beim Vermessen der Umgebung verbessert werden. Dabei ist es besonders vorteilhaft, wenn die Spiegelflächen des Drehspiegels gegenüber der horizontalen Achse gleich stark geneigt sind, wodurch der Drehspiegel einfach gewuchtet werden kann. Alternativ dazu könnten die Spiegelflächen des Drehspiegels gegenüber der horizontalen Achse verschieden stark geneigt sein, um den Sendestrahl bei einer Umdrehung des Drehspiegels um die horizontale Achse entlang Scanlinien verschieden starker Krümmung auf die Umgebung zu lenken.

In einer aerodynamischen Ausführungsform sind Ecken und/oder Kanten des Drehspiegels abgerundet. Dadurch kann der Drehspiegel besonders schnell und geräuscharm drehen.

Der Antrieb kann eine oder mehrere, insbesondere elektromechanische, Antriebseinheiten aufweisen, welche an der Halterung oder der Basis montiert sein können, z.B. einen einzigen Elektromotor, der über ein Getriebe sowohl die Halterung als auch den Drehspiegel dreht. In einer bevorzugten Ausführungsform weist der Antrieb eine an der Basis montierte erste elektromechanische Antriebseinheit für die Halterung und eine an der Halterung montierte zweite elektromechanische Antriebseinheit für den Drehspiegel auf. Die zwei Antriebseinheiten können die Drehung um die horizontale und die Drehung um die vertikale Achse voneinander unabhängig und besonders spielarm antreiben.

In einer ersten vorteilhaften Variante wird die zweite elektromechanische Antriebseinheit durch eine an der Basis montierte Energieversorgungseinheit drahtlos energieversorgt. Die drahtlose Energieversorgung der zweiten Antriebseinheit von der Basis aus spart Trägheitsmoment ein und ermöglicht eine mechanisch einfache Energieversorgung der mit der Halterung mitdrehenden zweiten Antriebseinheit, insbesondere ohne Schleifkontakte.

In einer zweiten vorteilhaften Variante, welche optional mit der ersten vorteilhaften Variante kombiniert werden kann, ist die zweite elektromechanische Antriebseinheit dazu ausgebildet, einen Drehwinkel des Drehspiegels um die horizontale Achse zu ermitteln und über eine optische und/oder drahtlose Verbindung an eine Auswerteeinheit und/oder eine Steuereinheit zu kommunizieren. Die optische Verbindung ermöglicht den Drehwinkel über die Zeit zu ermitteln und mit hoher Bandbreite, Geschwindigkeit und Genauigkeit an die Auswerteeinheit und/oder die Steuereinheit zu übertragen. Die drahtlose Verbindung ermöglicht eine mechanisch einfache Verbindung zur Auswerte-und/oder Steuereinheit. Die Auswerteeinheit und die Steuereinheit können mehrstückig (z.B. Auswertung und Steuerung in getrennten Einheiten) ausgeführt sein oder einstückig (Auswertung und Steuerung in einer Einheit) und jeweils entweder extern oder Teil des Laserscanners sein. Beispielsweise kann eine Steuereinheit am Laserscanner, insbesondere an der Basis, montiert sein und/oder eine Auswerteeinheit extern angeordnet sein.

In einer dritten vorteilhaften Variante, welche optional mit der ersten und/oder der zweiten vorteilhaften Variante kombiniert werden kann, ist die zweite elektromechanische Antriebseinheit dazu ausgebildet, ein Steuersignal über eine optische und/oder drahtlose Verbindung von einer Steuereinheit zu erhalten. Die optische Verbindung ermöglicht das Steuersignal mit hoher Bandbreite an die zweite elektromechanische Antriebseinheit zu übertragen. Die drahtlose Verbindung ermöglicht eine mechanisch einfache Verbindung zur Steuereinheit. Es versteht sich, dass die Steuereinheit der dritten vorteilhaften Variante die Steuereinheit der zweiten vorteilhaften Variante bilden kann.

In einer bevorzugten Ausführungsform umfasst der Laserscanner eine an der Halterung gegenläufig zum Drehspiegel drehbar gelagerte Schwungmasse. Die gegenläufig drehende Schwungmasse kompensiert ein Kippmoment, das sich ohne gegendrehende Schwungmasse durch die Drehung des um die horizontale Achse drehenden Drehspiegels um die vertikale Achse einstellt. Infolgedessen lässt sich der Drehspiegel besonders einfach und genau mit der Halterung um die vertikale Achse drehen und die Umgebung besonders genau vermessen. Die Schwungmasse könnte vom Antrieb mitangetrieben werden, z.B. über ein Getriebe. Wenn der Laserscanner alternativ dazu ferner eine separate elektromechanische Antriebseinheit umfasst, welche dazu ausgebildet ist, die Schwungmasse gegenläufig zum Drehspiegel zu drehen, kann die Schwungmasse unabhängig vom Antrieb, d.h. davon mechanisch entkoppelt, gedreht werden, z.B. mit besonders hoher Drehzahl und damit besonders klein ausfallen.

Der Lasersender kann an der Halterung montiert sein. Bevorzugt ist der Lasersender an der Basis montiert, um den Laserscanner kompakt zu gestalten und Trägheitsmoment einzusparen. Aus denselben Gründen ist es vorteilhaft, wenn der Laserempfänger an der Basis montiert ist.

Um den Laserscanner im Feld flexibel betreiben zu können, wird ein Satz aus einem oben genannten Laserscanner und einer Austauschhalterung für die Halterung mit verschiedener Drehspiegelposition bereitgestellt, wobei die Halterung lösbar, z.B. mittels Steck-, Schraub-, Klemm-, Schnapp-, Stift- oder Magnetverbindung, an der Basis gelagert ist und durch die Austauschhalterung austauschbar ist. Da die Austauschhalterung ihren Drehspiegel (der dem oben genannten Drehspiegel der Halterung entspricht) an anderer Position lagert, z.B. auf einer anderen Höhe, können durch Austausch der Halterung mit der Austauschhalterung unterschiedliche Scanbereiche abgedeckt werden.

Die Erfindung wird nachfolgend anhand von in den beigeschlossenen Zeichnungen dargestellten Ausführungsbeispielen näher erläutert. In den Zeichnungen zeigen:
Fig. 1 einen Laserscanner gemäß der Erfindung beim Vermessen einer Umgebung in einer Seitenansicht;
Fig. 2 den Laserscanner von Fig. 1 im Detail in einer Perspektivansicht von schräg vorne;
Fig. 3 den Laserscanner von Fig. 1 und 2 in einer ersten Drehstellung eines Drehspiegels in einer freigeschnittenen Perspektivansicht von der Seite;
Fig. 4 den Laserscanner von Fig. 1 und 2 in einer zweiten Drehstellung eines Drehspiegels in einer freigeschnittenen Perspektivansicht von der Seite; und
Fig. 5 eine Ausführungsvariante des Drehspiegels des Laserscanners der Fig. 1 bis 4 in einer Seitenansicht auf eine Drehachse des Drehspiegels.

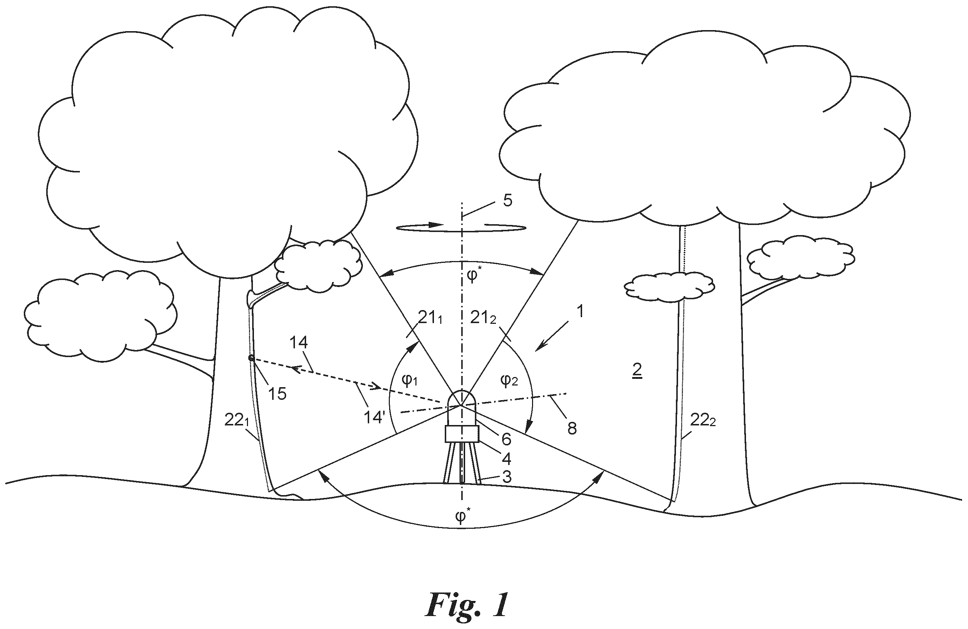

Fig. 1 zeigt einen Laserscanner 1 beim Vermessen einer Umgebung 2, hier: eines Waldes, in anderen, nicht gezeigten Beispielen einer Landschaft, eines Steinbruchs, eines Gebäudes, eines Straßenzugs, einer Stadt, eines Gewässergrunds, einer Wolke usw. Der Laserscanner 1 kann wie gezeigt stationär aufgestellt sein, z.B. auf einem Stativ 3, oder von z.B. einem Land-, Wasser- oder Luftfahrzeug mitgeführt werden und während der Fahrzeugbewegung oder im Stillstand scannen (nicht gezeigt).

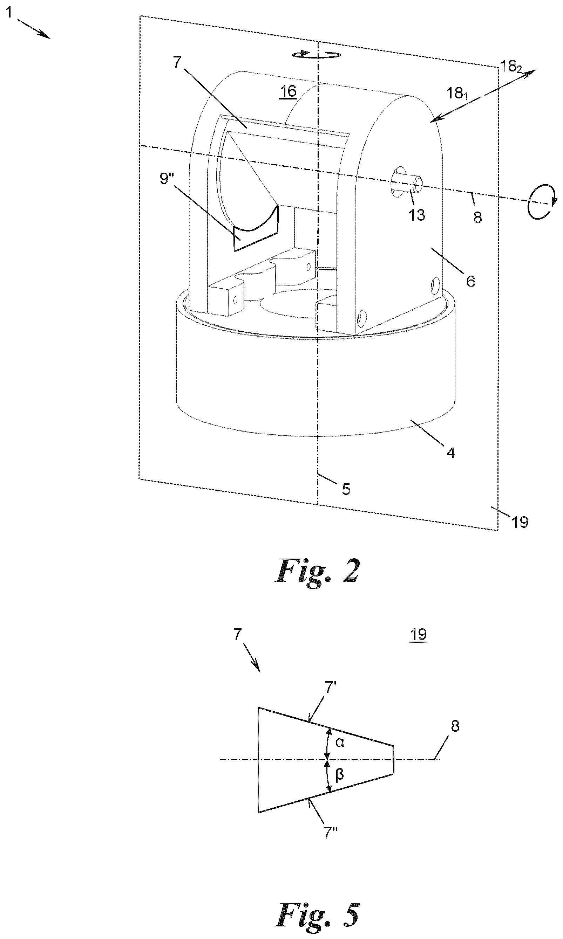

Gemäß den Fig. 2 bis 4 umfasst der Laserscanner 1 eine Basis 4 und eine an der Basis 4 um eine vertikale Achse 5 drehbar gelagerte Halterung 6. An der Halterung 6 ist ein Drehspiegel 7 um eine horizontale Achse 8 drehbar gelagert. Es wird angemerkt, dass die Begriffe "vertikal" und "horizontal" hierin nicht zwingend auf die Schwerkraft bezogen sind. Beispielsweise könnte der Laserscanner 1 an einer Wand montiert sein und die hierin als "vertikal" beschriebene Achse 5 normal auf die Richtung der Schwerkraft stehen. Ferner umfasst der Laserscanner 1 einen Antrieb 9, welcher die Halterung 6 um die vertikale Achse 5 und den Drehspiegel 7 um die horizontale Achse 8 antreibt, sowie einen Lasersender 10 und einen Empfänger 11.

Die Halterung 6 kann auf verschiedene Weise an der Basis 4 gelagert sein und den Drehspiegel 7 auf verschiedene Weise lagern. Z.B. kann die Halterung 6 normal auf die vertikale und die horizontale Achse 5, 8 gesehen die Form eines "U", "L", "V", "I" oder "C" haben, an dessen Ende/n und oder Schenkel sie den Drehspiegel 7 lagert. Im dargestellten Beispiel ist die Halterung 6 als Rahmen ausgebildet, der über ein Kugellager 12 an der Basis 4 gelagert ist und den Drehspiegel 7 portalförmig übergreift und über eine Welle 13 an den beiden Portalseiten lagert.

Der Antrieb 9 dreht einerseits die Halterung 6 um die vertikale Achse 5 und andererseits den an der Halterung 6 gelagerten Drehspiegel 7 um die horizontale Achse 8. Zu diesem Zweck kann der Antrieb 9 z.B. einen einzigen Motor haben, welcher über ein Getriebe, z.B. ein Zahnrad-, Reibrad-, und/oder Kettengetriebe mit zwei Ausgängen sowohl die Drehung der Halterung 6 um die vertikale Achse 5 als auch die Drehung des Drehspiegels 7 um die horizontale Achse 8 bewirkt. Im dargestellten Beispiel hat der Antrieb 9 hingegen eine erste elektromechanische Antriebseinheit 9', welche die Halterung 6 um die vertikale Achse 5 dreht und eine von der ersten separate zweite elektromechanische Antriebseinheit 9", welche den Drehspiegel 7 um die horizontale Achse 8 dreht. Die erste Antriebseinheit 9' ist hier an der Basis 4 gelagert (alternativ: an der Halterung 6) und die zweite Antriebseinheit 9" an der Halterung 6 (alternativ: an der Basis 4).

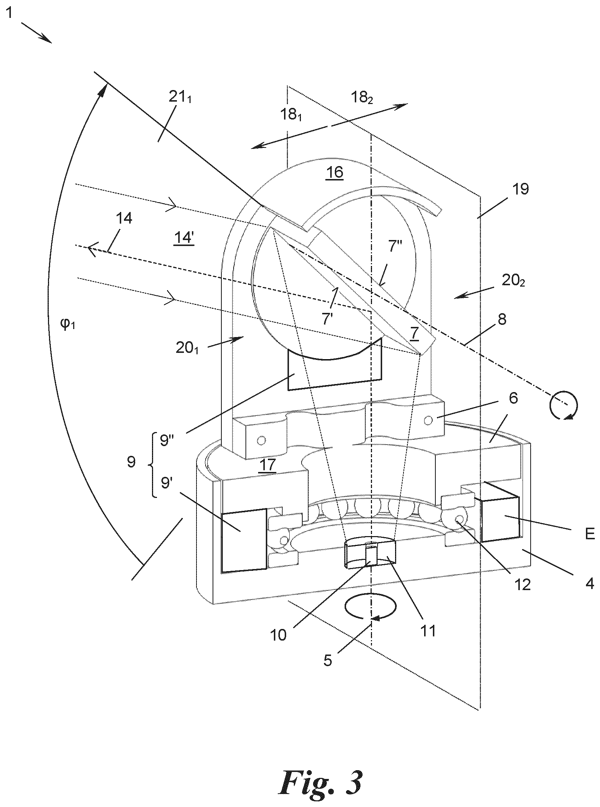

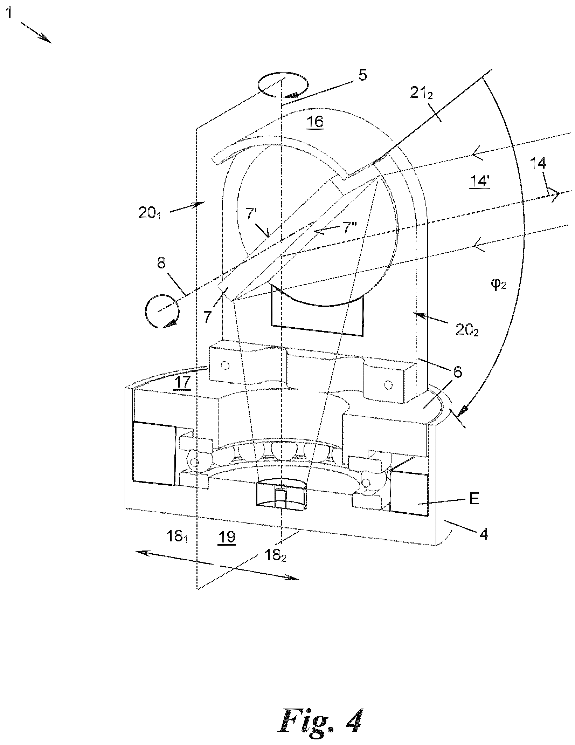

Die Antriebseinheiten 9', 9" können jeweils energieautark sein oder extern energieversorgt werden. Im Beispiel der Fig. 3 und 4 wird die zweite Antriebseinheit 9" durch eine an der Basis 4 montierte Energieversorgungseinheit E drahtgebunden oder drahtlos, z.B. induktiv, energieversorgt.

In der dargestellten Ausführungsform (aber nicht zwingend) treibt der Antrieb 9 die Drehung um die horizontale Achse 5 mit einer geringeren Drehgeschwindigkeit als jene um die horizontale Achse 8 an. Die Drehungen sind meist jeweils kontinuierlich, z.B. gleichmäßig oder schrittweise rundum immer in dieselbe Drehrichtung; alternativ könnte eine oder beide Drehungen oszillierend sein.

Optional kann der Laserscanner 1 eine Schwungmasse (nicht gezeigt) aufweisen, welche an der Halterung 6 gegenläufig zum Drehspiegel 7 drehbar gelagert ist, z.B. um eine zur horizontalen Achse 8 im Wesentlichen parallele Achse. Die Schwungmasse kann vom Antrieb 9 mitangetrieben werden, z.B. über ein Getriebe, oder von einer vom Antrieb 9 entkoppelten, separaten elektromechanischen Antriebseinheit. Die Schwungmasse dreht sich entgegen der Drehrichtung des Drehspiegels 7 und kompensiert so ein Kippmoment, das sich ohne gegendrehende Schwungmasse durch die Drehung des um die horizontale Achse 8 drehenden Drehspiegels 7 um die vertikale Achse 5 einstellt.

Bezugnehmend auf die Fig. 1, 3 und 4 sendet der Lasersender 10 einen gepulsten oder modulierten Sendestrahl 14 über den Drehspiegel 7 auf viele Punkte ("Abtastpunkte") 15 der Umgebung 2 aus. Der Lasersender 10 kann an der Basis 4 (Fig. 3 und 4) montiert sein oder an der Halterung 6, z.B. am Portalsteg 16 oder am Boden 17 des Rahmens 6 (nicht gezeigt). Der Lasersender 10 kann den Sendestrahl 14 unter verschiedenen Orientierungen auf den Drehspiegel 7 aussenden, beispielsweise parallel zur vertikalen Achse 5 auf die horizontale Achse 8 hin (Fig. 3 und 4: entlang der vertikalen Achse 5), oder alternativ schräg zur vertikalen Achse 5 und/oder neben die horizontale Achse 8. Optional kann der Lasersender 10 einen oder mehrere Umlenkspiegel aufweisen, über den/die er den Sendestrahl 14 auf den Drehspiegel 7 aussendet (nicht gezeigt).

Der Sendestrahl 14 wird an jedem Abtastpunkt 15 der Umgebung 2 als Empfangsstrahl 14' reflektiert und vom Empfänger 11 empfangen. Der Empfänger 11 kann an der Basis 4 (Fig. 3 und 4) oder an der Halterung 6 montiert sein, z.B. neben dem Drehspiegel 7 oder um diesen herum (nicht gezeigt). Der Empfänger 11 kann den Empfangsstrahl 14' wie gezeigt über den Drehspiegel 7 empfangen oder direkt, d.h. nicht über den Drehspiegel 7.

Aus der Laufzeit der Sende- und Empfangsstrahlen 14, 14' kann die Entfernung zum jeweiligen Abtastpunkt 15 der Umgebung 2 ermittelt und daraus - unter Kenntnis der Richtung des Sendestrahls 14 und optional der Lage und Orientierung des Laserscanners 1 - ein Modell der Umgebung 2, z.B. eine sogenannte "3D-Punktwolke", erstellt werden, beispielsweise in einer Auswerteinheit des Laserscanners 1 oder in einer externen Auswerteeinheit (nicht gezeigt).

Um die Sende- und Empfangszeiten der Sende- und Empfangsstrahlen 14, 14' und die Drehstellungen des Drehspiegels 7 und der Halterung 6 zu erhalten bzw. zu steuern, kann die Auswerteeinheit oder eine Steuereinheit des Laserscanners 1 drahtlos oder drahtgebunden mit dem Antrieb 9, dem Lasersender 10 und dem Laserempfänger 11 verbunden sein. Beispielsweise kann die zweite elektromechanische Antriebseinheit 9" einen Drehwinkel des Drehspiegels 7 um die horizontale Achse 8 ermitteln (z.B. mittels eines Drehwinkelsensors) und über eine optische und/oder drahtlose Verbindung an die externe oder am Laserscanner 1 (insbesondere an der Basis 4) montierte Auswerte-und/oder Steuereinheit kommunizieren. Zusätzlich oder alternativ dazu kann die zweite elektromechanische Antriebseinheit 9 ein Steuersignal über eine optische und/oder drahtlose Verbindung von der Steuereinheit zu erhalten, um den Drehspiegel 7 anhand des Steuersignals steuern.

Der Drehspiegel 7 ist ein beidseitig verspiegelter Flachspiegel, d.h. er hat eine flache Form, z.B. die eines Quaders, mit zwei einander gegenüberliegenden Spiegelflächen ("Hauptflächen") 7', 7", die wesentlich größer sind als die verbleibenden, die beiden Hauptflächen verbindenden "Randflächen". Mit anderen Worten ist der Drehspiegel 7 im Wesentlichen platten-oder, wie weiter unten näher erläutert, keilförmig.

Ferner weist der Laserscanner 1 beidseits, d.h. zu jeder Seite 18₁, 18₂, einer von der vertikalen Achse 5 und der horizontalen Achse 8 aufgespannten gedachten Ebene 19 eine Durchtrittsöffnung 20₁, 20₂ für die Sende- und Empfangsstrahlen 14, 14' auf. Die Durchtrittsöffnungen 20₁, 20₂ sind für die Sende-und Empfangsstrahlen 14, 14' transparente Bereiche am Laserscanner 1, z.B. Fenster oder (wie hier) Ausnehmungen, und sind durch intransparente Stellen voneinander getrennt (wie hier durch den Portalsteg 16 des Rahmens 6) oder alternativ verbunden, z.B. jeweils als Teil eines Dom-, oder Zylindermantelsegment-förmigen Fensters ausgeführt.

Wie in den Fig. 3 und 4 ersichtlich, lenkt bei Drehung des Drehspiegels 7 (hier: bei Drehung im Uhrzeigersinn) zunächst die erste Hauptfläche 7' in aufeinanderfolgenden ersten Drehstellungen des Drehspiegels 7 (eine davon ist in Fig. 3 dargestellt) den Sendestrahl 14 durch die erste Durchtrittsöffnung 20₁ an der einen (hier: linken) Seite 18₁ der Ebene 19 über den Winkelbereich φ₁ auf die Umgebung 2 ("Vorwärtsblick" mittels eines Vorwärtsscanfächers 21₁). In weiterer Folge lenkt die zweite Hauptfläche 7" in aufeinanderfolgenden zweiten Drehstellungen des Drehspiegels 7 (eine davon ist in Fig. 4 dargestellt) den Sendestrahl 14 durch die zweite Durchtrittsöffnung 20₂ an der anderen (hier: rechten) Seite 18₂ der Ebene 19 über den Winkelbereich φ₂ auf die Umgebung 2 ("Rückwärtsblick" mittels eines Rückwärtsscanfächers 21₂). Bei weiterer Drehung um die horizontale Achse 8 lenkt - nach einiger Zeit - die zweite Hauptfläche 7" den Sendestrahl 14 zur vorgenannten einen Seite 18₁ ab (erste Drehstellungen), ehe die erste Hauptfläche 7' den Sendestrahl 14 erst zur anderen Seite 18₂ (zweite Drehstellungen), und dann wieder zur einen Seite 18₁ (erste Drehstellungen) ablenkt, usw.

Im Ergebnis vermisst der Laserscanner 1 der Fig. 1 bis 4 die Umgebung 2 abwechselnd mit dem "Vorwärtsblick" mittels des Vorwärtsscanfächers 21₁ und dem "Rückwärtsblick" mittels des Rückwärtsscanfächers 21₂, wobei sich die Scanfächer 21₁, 21₂ mit der horizontalen Achse 8 um die vertikale Achse 5 mitdrehen. Ebenso dreht sich die von den beiden Achsen 5, 8 aufgespannte Ebene 19 und damit die Seiten 18₁, 18₂ mit der horizontalen Achse 8 um die vertikale Achse 5 mit.

Zwischen den ersten und den zweiten Winkelbereichen φ₁, φ₂ bzw. Drehstellungen ergibt sich aufgrund der endlichen Dicke des Drehspiegels 7 und der Breite der Basis 4 ein Totbereich φ* (Fig. 1), in dem der Sendestrahl 14 nicht auf die Umgebung 2 auftrifft. Optional kann der Lasersender 10 dazu ausgebildet sein, in diesem Totbereich φ* nicht zu senden.

In den Fig. 2 und 3 hat der Drehspiegel 7 die Form einer rechteckigen Platte. Im Beispiel der Fig. 5 ist der Drehspiegel 7 keilförmig, u.zw. derart, dass die erste Hauptfläche 7' gegenüber der horizontalen Achse 8 mit einem Neigungswinkel α geneigt und die zweite Hauptfläche 7" gegenüber der horizontalen Achse 8 mit einem Neigungswinkel β geneigt ist. Durch die Neigung der Hauptflächen 7', 7" sind Scanlinien 22₁, 22₂ (Fig. 1) je nach Orientierung des Sendestrahls 14 gekrümmt, wobei die Krümmungen in Vorwärtsblick gegenüber jenen in Rückwärtsblick umgekehrt sind. Die Neigungswinkel α, β können gleich sein (Fig. 5) oder verschieden. Die Neigungswinkel α, β können beispielsweise jeweils in einem Bereich von 0,05° und 10° liegen, z.B. in einem Bereich von 0,1° bis 5°, insbesondere in einem Bereich von 0,2° bis 2,5°.

Obwohl die vertikalen und horizontalen Achsen 5, 8 in den dargestellten Ausführungsformen orthogonal aufeinander stehen und einander in einem Punkt schneiden, ist dies nicht zwingend. Beispielsweise können die vertikalen und horizontalen Achsen leicht von der orthogonalen Stellung abweichen und/oder voneinander einen geringen Abstand voneinander aufweisen, also windschief sein, in welchem Fall die Ebene 19 von diesen näherungsweise aufgespannt wird, z.B. derart, dass sie die horizontale Achse 8 beinhaltet und zur vertikalen Achse 5 parallel ist.

Optional ist die Halterung 6 lösbar, z.B. mittels Steck-, Schraub-, Klemm-, Schnapp-, Stift- oder Magnetverbindung, an der Basis 4 gelagert, z.B. um schnell durch eine Austauschhalterung (nicht gezeigt) mit ähnlichem Drehspiegelaufbau aber verschiedener Drehspiegelposition, insbesondere verschiedener Höhe des Drehspiegels, ausgetauscht werden zu können.

Die Erfindung ist nicht auf die dargestellten Ausführungsformen beschränkt, sondern umfasst alle Varianten, Modifikationen und deren Kombinationen, die in den Rahmen der angeschlossenen Ansprüche fallen.

## Patentansprüche

1. Laserscanner zum Vermessen einer Umgebung (2), umfassend
eine Basis (4),
eine an der Basis (4) um eine vertikale Achse (5) drehbar gelagerte Halterung (6),
einen an der Halterung (6) um eine horizontale Achse (8) drehbar gelagerten Drehspiegel (7) mit mehreren Spiegelflächen (7', 7"),
einen Antrieb (9) zum Drehen der Halterung (6) um die vertikale Achse (5) und zum Drehen des Drehspiegels (7) um die horizontale Achse (8),
einen Lasersender (10) zum Aussenden eines Sendestrahls (14) über den Drehspiegel (7) auf die Umgebung (2), und
einen Empfänger (11) zum Empfangen des an der Umgebung (2) als Empfangsstrahl (14') reflektierten Sendestrahls (14);
**dadurch gekennzeichnet, dass** der Laserscanner (1) beidseits einer von der horizontalen und der vertikalen Achse (5, 8) aufgespannten Ebene (19) eine Durchtrittsöffnung (20₁, 20₂) für die Sende- und Empfangsstrahlen (14, 14') aufweist, und der Drehspiegel (7) eine flache Form mit zwei einander gegenüberliegenden Hauptflächen (7', 7") hat, welche die Spiegelflächen (7', 7") bilden und den Sendestrahl (14) bei Drehung des Drehspiegels (7) in ersten Drehstellungen des Drehspiegels (7) durch die Durchtrittsöffnung (20₁) an einer Seite (18₁) der genannten Ebene (19) auf die Umgebung (2) ablenken und in zweiten Drehstellungen des Drehspiegels (7) durch die Durchtrittsöffnung (20₂) an der anderen Seite (18₂) der genannten Ebene (19).

2. Laserscanner nach Anspruch 1, wobei der Lasersender (10) dazu ausgebildet ist, den Sendestrahl (14) im Wesentlichen auf die horizontale Achse (8) hin auszusenden.

3. Laserscanner nach Anspruch 1 oder 2, wobei der Lasersender (10) dazu ausgebildet ist, den Sendestrahl (14) entlang der vertikalen Achse (5) auszusenden.

4. Laserscanner nach einem der Ansprüche 1 bis 3, wobei zumindest eine, insbesondere beide der Spiegelflächen (7', 7") des Drehspiegels (7) gegenüber der horizontalen Achse (8) geneigt ist/sind.

5. Laserscanner nach Anspruch 4, wobei die Spiegelflächen (7', 7") des Drehspiegels (7) gegenüber der horizontalen Achse (8) gleich geneigt sind.

6. Laserscanner nach einem der Ansprüche 1 bis 5, wobei Ecken und/oder Kanten des Drehspiegels (7) abgerundet sind.

7. Laserscanner nach einem der Ansprüche 1 bis 6, wobei der Antrieb (9) eine an der Basis (4) montierte erste elektromechanische Antriebseinheit (9') für die Halterung (6) und eine an der Halterung (6) montierte zweite elektromechanische Antriebseinheit (9") für den Drehspiegel (7) aufweist.

8. Laserscanner nach Anspruch 7, wobei die zweite elektromechanische Antriebseinheit (9") durch eine an der Basis (4) montierte Energieversorgungseinheit (E) drahtlos energieversorgt wird.

9. Laserscanner nach Anspruch 7 oder 8, wobei die zweite elektromechanische Antriebseinheit (9") dazu ausgebildet ist, einen Drehwinkel des Drehspiegels (7) um die horizontale Achse (8) zu ermitteln und über eine optische und/oder drahtlose Verbindung an eine Auswerteeinheit und/oder eine Steuereinheit zu kommunizieren.

10. Laserscanner nach einem der Ansprüche 7 bis 9, wobei die zweite elektromechanische Antriebseinheit (9") dazu ausgebildet ist, ein Steuersignal über eine optische und/oder drahtlose Verbindung von einer Steuereinheit zu erhalten.

11. Laserscanner nach einem der Ansprüche 1 bis 10, ferner umfassend eine an der Halterung (6) gegenläufig zum Drehspiegel (7) drehbar gelagerte Schwungmasse.

12. Laserscanner nach Anspruch 11, ferner umfassend eine separate elektromechanische Antriebseinheit, welche dazu ausgebildet ist, die Schwungmasse gegenläufig zum Drehspiegel (7) zu drehen.

13. Laserscanner nach einem der Ansprüche 1 bis 12, wobei der Lasersender (10) an der Basis (4) montiert ist.

14. Laserscanner nach einem der Ansprüche 1 bis 13, wobei der Laserempfänger (11) an der Basis (4) montiert ist.

15. Satz aus einem Laserscanner nach einem der Ansprüche 1 bis 14 und einer Austauschhalterung für die Halterung (6) mit verschiedener Drehspiegelposition, wobei die Halterung (6) lösbar an der Basis (4) gelagert ist und durch die Austauschhalterung austauschbar ist.

## Geänderte Patentansprüche

### Geänderte Patentansprüche gemäss Regel 137(2) EPÜ.

1. Laserscanner zum Vermessen einer Umgebung (2), umfassend
eine Basis (4),
eine an der Basis (4) um eine vertikale Achse (5) drehbar gelagerte Halterung (6),
einen an der Halterung (6) um eine horizontale Achse (8) drehbar gelagerten Drehspiegel (7) mit mehreren Spiegelflächen (7', 7"),
einen Antrieb (9) zum Drehen der Halterung (6) um die vertikale Achse (5) und zum Drehen des Drehspiegels (7) um die horizontale Achse (8),
einen Lasersender (10) zum Aussenden eines Sendestrahls (14) über den Drehspiegel (7) auf die Umgebung (2), und
einen Empfänger (11) zum Empfangen des an der Umgebung (2) als Empfangsstrahl (14') reflektierten Sendestrahls (14);
wobei der Laserscanner (1) beidseits einer von der horizontalen und der vertikalen Achse (5, 8) aufgespannten Ebene (19) eine Durchtrittsöffnung (20₁, 20₂) für die Sende- und Empfangsstrahlen (14, 14') aufweist, und der Drehspiegel (7) ein beidseits verspiegelter Flachspiegel ist, dessen zwei einander gegenüberliegende Hauptflächen (7', 7") die Spiegelflächen (7', 7") bilden und den Sendestrahl (14) bei Drehung des Drehspiegels (7) in ersten Drehstellungen des Drehspiegels (7) durch die Durchtrittsöffnung (20₁) an einer Seite (18₁) der genannten Ebene (19) auf die Umgebung (2) ablenken und in zweiten Drehstellungen des Drehspiegels (7) durch die Durchtrittsöffnung (20₂) an der anderen Seite (18₂) der genannten Ebene (19),
**dadurch gekennzeichnet, dass** zumindest eine, insbesondere beide der Spiegelflächen (7', 7") des Drehspiegels (7) gegenüber der horizontalen Achse (8) geneigt ist/sind.

2. Laserscanner nach Anspruch 1, wobei der Lasersender (10) dazu ausgebildet ist, den Sendestrahl (14) im Wesentlichen auf die horizontale Achse (8) hin auszusenden.

3. Laserscanner nach Anspruch 1 oder 2, wobei der Lasersender (10) dazu ausgebildet ist, den Sendestrahl (14) entlang der vertikalen Achse (5) auszusenden.

4. Laserscanner nach einem der Ansprüche 1 bis 3, wobei die Spiegelflächen (7', 7") des Drehspiegels (7) gegenüber der horizontalen Achse (8) gleich geneigt sind.

5. Laserscanner nach einem der Ansprüche 1 bis 4, wobei Ecken und/oder Kanten des Drehspiegels (7) abgerundet sind.

6. Laserscanner nach einem der Ansprüche 1 bis 5, wobei der Antrieb (9) eine an der Basis (4) montierte erste elektromechanische Antriebseinheit (9') für die Halterung (6) und eine an der Halterung (6) montierte zweite elektromechanische Antriebseinheit (9") für den Drehspiegel (7) aufweist.

7. Laserscanner nach Anspruch 6, wobei die zweite elektromechanische Antriebseinheit (9") durch eine an der Basis (4) montierte Energieversorgungseinheit (E) drahtlos energieversorgt wird.

8. Laserscanner nach Anspruch 6 oder 7, wobei die zweite elektromechanische Antriebseinheit (9") dazu ausgebildet ist, einen Drehwinkel des Drehspiegels (7) um die horizontale Achse (8) zu ermitteln und über eine optische und/oder drahtlose Verbindung an eine Auswerteeinheit und/oder eine Steuereinheit zu kommunizieren.

9. Laserscanner nach einem der Ansprüche 6 bis 8, wobei die zweite elektromechanische Antriebseinheit (9") dazu ausgebildet ist, ein Steuersignal über eine optische und/oder drahtlose Verbindung von einer Steuereinheit zu erhalten.

10. Laserscanner nach einem der Ansprüche 1 bis 9, ferner umfassend eine an der Halterung (6) gegenläufig zum Drehspiegel (7) drehbar gelagerte Schwungmasse.

11. Laserscanner nach Anspruch 10, ferner umfassend eine separate elektromechanische Antriebseinheit, welche dazu ausgebildet ist, die Schwungmasse gegenläufig zum Drehspiegel (7) zu drehen.

12. Laserscanner nach einem der Ansprüche 1 bis 11, wobei der Lasersender (10) an der Basis (4) montiert ist.

13. Laserscanner nach einem der Ansprüche 1 bis 12, wobei der Laserempfänger (11) an der Basis (4) montiert ist.

14. Satz aus einem Laserscanner nach einem der Ansprüche 1 bis 13 und einer Austauschhalterung für die Halterung (6) mit verschiedener Drehspiegelposition, wobei die Halterung (6) lösbar an der Basis (4) gelagert ist und durch die Austauschhalterung austauschbar ist.
